# EUROPÄISCHE PATENTSCHRIFT

(11) **EP 3 359 440 B1**
(45) Veröffentlichungstag und Bekanntmachung des Hinweises auf die Patenterteilung: **09.01.2019**
(21) Anmeldenummer: 17821794.9
(22) Anmeldetag: 28.11.2017
(51) Int. Cl.: B62D 7/15

(54) **MEHRSPURIGES KRAFTFAHRZEUG**
MULTI-TRACK MOTOR VEHICLE
VÉHICULE AUTOMOBILE À VOIES MULTIPLES

(30) Priorität: 28.11.2016 DE 102016223538; 22.03.2017 DE 102017204853
(43) Veröffentlichungstag der Anmeldung: 15.08.2018
(73) Patentinhaber: Schulze, Hans-Jürgen, 14532 Stahnsdorf (DE)
(72) Erfinder: Schulze, Hans-Jürgen, 14532 Stahnsdorf (DE)
(74) Vertreter: Maikowski & Ninnemann Patentanwälte Partnerschaft mbB
(86) Internationale Anmeldenummer: PCT/EP2017/080667
(87) Internationale Veröffentlichungsnummer: WO 2018/096173

(56) Entgegenhaltungen:
- DE-A1- 4 030 819
- US-A- 4 756 546

## Beschreibung

Die Erfindung betrifft ein mehrspuriges und mehrachsiges Kraftfahrzeug gemäß dem Oberbegriff des Anspruchs 1.

Derartige Kraftfahrzeuge sind insbesondere mit einer solchen Allradlenkung ausgestattet, die dazu dient, den Wendekreis des Fahrzeugs zu verringern und/oder die Fahrstabilität insbesondere bei höheren Fahrgeschwindigkeiten zu erhöhen. Eine Schwierigkeit ist, dass derartige Fahrzeuge und auch konventionelle Fahrzeuge, die nicht mit einer solchen Allradlenkung ausgestattet sind, die starke Tendenz haben, sich während einer Kurvendurchfahrt nach außen zu neigen, was die Fahrstabilität stark beeinträchtigen kann. Zudem verleitet die Neigung des Fahrzeugs nach außen den Fahrzeugführer häufig zu einem zu starken Gegensteuern, was gerade bei hohen Geschwindigkeiten zu einem Verlust der Kontrolle über das Fahrzeug führen kann.

Das der Erfindung zugrunde liegende Problem besteht darin, die Stabilität eines Fahrzeugs insbesondere bei einer Kurvendurchfahrt deutlich zu erhöhen.

US 4 756 546 offenbart eine Allradlenkung wobei der Nachlauf der Hinterräder neutral bis positiv sein kann, DE 40 30 819 offenbart eine Allradlenkung wobei der Nachlauf der Hinterräder negativ bis positiv sein kann.

Das Problem wird durch die Bereitstellung eines Fahrzeuges mit den Merkmalen des Anspruchs 1 gelöst. Weiterbildungen der Erfindung sind in den abhängigen Ansprüchen angegeben.

Danach wird ein mehrspuriges und mehrachsiges Kraftfahrzeug zur Verfügung gestellt, mit
- mindestens zwei Vorderrädern und mindestens zwei Hinterrädern sowie
- einer Lenkvorrichtung, die zum Lenken der Vorder- und Hinterräder des Kraftfahrzeugs ausgebildet ist, wobei
- mittels der Lenkvorrichtung die mindestens zwei Vorderräder um jeweils eine Vorderradlenkdrehachse schwenkbar sind, wobei die Vorderradlenkdrehachsen jeweils so orientiert sind, dass in Bezug auf das jeweilige Vorderrad ein negativer Nachlauf entsteht, und
- mittels der Lenkvorrichtung die mindestens zwei Hinterräder um jeweils eine Hinterradlenkdrehachse schwenkbar sind, die so orientiert ist, dass in Bezug auf das jeweilige Hinterrad ein positiver Nachlauf entsteht.

Abweichend von einem konventionellen Fahrzeug ist der Nachlauf in Bezug auf die Vorderräder des erfindungsgemäßen Fahrzeugs (bei dem es sich insbesondere um ein Vierradfahrzeug handelt) negativ und in Bezug auf die Hinterräder positiv.

Diese Nachlaufgeometrie bewirkt eine Stabilisierung des Fahrzeugs, z.B. während einer Kurvendurchfahrt, wobei insbesondere einer Neigung des Fahrzeugs nach außen (zur Kurvenaußenseite) während der Kurvenfahrt entgegengewirkt wird oder sich sogar eine Neigung des Fahrzeugs nach innen (zur Kurveninnenseite) einstellt.

Der Begriff "Nachlauf" bezieht sich auf die Schrägstellung der jeweiligen Lenkdrehachse relativ zu einer Senkrechten in Fahrzeuglängsrichtung betrachtet. Insbesondere wird als Nachlauf der Abstand zwischen dem Radaufstandspunkt, d.h. einem Punkt der Radmittellinie, der auf der Fahrbahnebene aufliegt, und dem Aufstandspunkt der jeweiligen Lenkdrehachse, d.h. dem Auftreffpunkt der Lenkdrehachse auf der Fahrbahn, verstanden. Bei einem negativen Nachlauf befindet sich der Aufstandspunkt der Lenkdrehachse - in Vorwärtsfahrtrichtung betrachtet - hinter und bei einem positiven Nachlauf vor dem Radaufstandspunkt.

Die "Lenkdrehachse" ist insbesondere diejenige Achse, um die das jeweilige Rad bei einer von einem Fahrzeugführer eingeleiteten Lenkbewegung gedreht wird.

Wie oben bereits angedeutet, kann der Nachlauf bei einem Vierradfahrzeug natürlich auch in Bezug auf beide Vorderräder negativ sein, d.h. beide Vorderräder können jeweils um eine Vorderradlenkdrehachse schwenkbar sein, die jeweils so orientiert es, dass ein negativer Nachlauf besteht. Analog kann auch der Nachlauf in Bezug auf beide Hinterräder positiv sein, d.h. beide Hinterräder sind jeweils um eine Hinterradlenkdrehachse schwenkbar, die jeweils so orientiert es, dass ein positiver Nachlauf entsteht. In diesem Zusammenhang wird darauf hingewiesen, dass die Erfindung jedoch nicht auf Vierradfahrzeuge beschränkt ist. Möglich ist insbesondere, dass das erfindungsgemäße Fahrzeug mehr als zwei Vorder- und/oder Hinterräder bzw. Vorder- und/oder Hinterachsen aufweist.

Wie oben bereits ebenfalls angedeutet, können die (jeweils insbesondere zwei) Vorder- und Hinterräder des Fahrzeugs so um die jeweilige Vorderradlenkdrehachse und Hinterradlenkdrehachse schwenkbar sein, dass sich das Fahrzeugchassis bei Kurvenfahrt zur Kurveninnenseite neigt.

Die Lenkdrehachsen verlaufen insbesondere so, dass bei einer gleichsinnigen Schwenkung des mindestens einen Vorderrads und des mindestens einen Hinterrads um die jeweilige Lenkdrehachse eine gegensinnige Rotation des Vorder- und Hinterrads um eine senkrecht zur Fahrzeuglängsrichtung verlaufenden Achse erfolgt.

Darüber hinaus kann das erfindungsgemäße Fahrzeug ein rein passives Fahrwerk aufweisen. Insbesondere umfasst das Fahrwerk keinerlei Aktuatoren, die eine Neigung des Fahrzeugchassis während einer Kurvenfahrt zur Kurveninnenseite hin erzeugen. Die oben erwähnte Neigung das Fahrzeug zur Kurveninnenseite hin ergibt sich hier allein aus der Lenkgeometrie (negativer Nachlauf vorne, positiver Nachlauf hinten), insbesondere bei entgegengesetztem Lenkeinschlag der Vorder- und Hinterräder in Fahrtrichtung betrachtet, und ist entsprechend auf vergleichsweise einfache Weise umsetzbar.

Als Folge des negativen Nachlaufs in Bezug auf das Vorderrad kann sich bei einem Schwenken des Vorderrads um die Vorderradlenkdrehachse, d.h. bei einer Kurvenfahrt, eine Neigung des Vorderrads um eine parallel zur Fahrzeuglängsachse verlaufende Achse zur Kurvenaußenseite hin einstellen. Dies gilt entsprechend für das Hinterrad.

Das erfindungsgemäße Fahrzeug weist insbesondere in Bezug auf die Vorder- und/oder Hinterräder einen positiven Lenkrollhalbmesser oder einen Lenkrollhalbmesser von null auf.

Gemäß einer anderen Weiterbildung der Erfindung sind die Vorderräder jeweils über eine Radachse an einem Achsschenkel angebracht, der um die Vorderradlenkdrehachsen schwenkbar ist, und die Hinterräder sind jeweils ebenfalls über eine Radachse an einem Achsschenkel angebracht, der um die Hinterradlenkdrehachsen schwenkbar ist.

Beispielsweise weist das Kraftfahrzeug zudem mindestens eine erste Spurstange auf, über die zumindest zwei der Vorderräder mit einem Lenkgetriebe gekoppelt sind, und/oder eine zweite Spurstange, über die zumindest zwei der Hinterräder mit einem Lenkgetriebe gekoppelt sind. Möglich ist, dass die erste Spurstange zumindest näherungsweise parallel zu der zweiten Spurstange verläuft. Insbesondere werden bei dieser Konfiguration die beiden Vorderräder über die erste Spurstange und die Hinterräder über die zweite Spurstange miteinander gekoppelt.

Möglich ist allerdings auch, dass die erste Spurstange schräg zu der zweiten Spurstange verläuft, wobei insbesondere über die erste Spurstange ein Vorderrad mit einem diagonal gegenüberliegenden Hinterrad und über die zweite Spurstange das andere Vorderrad mit dem anderen Hinterrad gekoppelt ist (d.h. eine X-förmige Anordnung der Spurstangen besteht).

Denkbar ist, dass sich die Spurstangen durchgehend von dem einem bis zu einem anderen Rad erstrecken. Möglich ist jedoch auch, dass die erste und/oder die zweite Spurstange aus Teilsegmenten besteht, wobei z.B. ein erstes Teilsegment von dem einen Rad bis zu dem Lenkgetriebe und ein zweites Teilsegment von dem Lenkgetriebe bis zu dem anderen Rad verläuft.

Möglich ist auch, dass die erste Spurstange über einen um die Vorderradlenkdrehachse schwenkbaren Spurstangenhebel zumindest mit einem der Vorderräder und/oder die zweite Spurstange über einen um die Hinterradlenkdrehachse schwenkbaren Spurhebel zumindest mit einem der Hinterräder gekoppelt ist. Die Spurhebel können sowohl in der parallelen Konfiguration (erste Spurstange verläuft parallel zur zweiten Spurstange) oder auch in der gekreuzten Konfiguration (erste Spurstange verläuft schräg zu der zweiten Spurstange) vorgesehen sein.

Denkbar ist darüber hinaus, dass der Nachlauf der Vorder- und Hinterrads des Fahrzeugs so gewählt ist, dass der Mittelpunkt einer Kreisbahn, die das Fahrzeug bei einer Kurvenfahrt beschreibt, zwischen einer Vorder- und einer Hinterachse des Fahrzeugs liegt. Insbesondere liegt der Mittelpunkt der Kreisbahn somit nicht wie bei den meisten konventionellen Fahrzeugen auf einer Verlängerung einer Hinterachse des Fahrzeugs.

Möglich ist insbesondere, dass sich der Betrag des Nachlaufs des Vorderrads von dem Betrag des Nachlaufs des Hinterrads unterscheidet; z.B. um eine bestimmte Position des erwähnten Mittelpunktes der Kreisbahn bei einer Kurvenfahrt in Bezug auf die Vorder- und Hinterachse einzustellen. Allerdings ist es natürlich auch möglich, dass der Betrag des Nachlaufs des Vorderrades dem Betrag des Nachlaufs des Hinterrades zumindest näherungsweise entspricht.

Das erfindungsgemäße Kraftfahrzeug kann zudem eine Einstelleinrichtung zum Einstellen des Nachlaufs in Bezug auf das mindestens eine Vorderrad und/oder zum Einstellen des Nachlaufs in Bezug auf das mindestens eine Hinterrad aufweisen. Über die Einstellung des Nachlaufs lässt sich z.B. der Mittelpunkt der oben erwähnten Kreisbahn des Fahrzeugs bei einer Kurvenfahrt einstellen. Die Einstelleinrichtung umfasst insbesondere Aktuatoren, mit denen sich z.B. die Orientierung der Lenkdrehachsen verändern lässt.

Denkbar ist auch, dass das mindestens eine Vorder- und/oder Hinterrad des Fahrzeugs bezogen auf eine Geradeausfahrt des Fahrzeugs einen positiven Sturz aufweist. Die Räder weisen somit in einer Ausgangsstellung jeweils eine Neigung nach außen auf, d.h. die Radmittelebene ist gegenüber einer durch den Radaufstandspunkt verlaufenden Senkrechten nach außen (von einer Mittellinie des Fahrzeugs in Fahrzeuglängsrichtung weg) geneigt. Möglich ist allerdings auch, dass das Vorder- und/oder Hinterrad einen negativen Sturz besitzt, d.h. in einer Ausgangsposition sind die Räder nach innen (auf die Fahrzeugmittellinie zu) geneigt. Das Fahrzeug kann darüber hinaus auch eine Einrichtung zur Veränderung des Sturzes der Räder aufweisen, z.B. in Form von entsprechenden Aktuatoren, vgl. z.B. das Dokument DE 10 2005 037 973 A1, deren Inhalt in diesem Zusammenhang einbezogen ist.

Die Erfindung wird im Folgenden anhand von Ausführungsbeispielen unter Bezugnahme auf die Figuren näher erläutert. Es zeigen:
- Figur 1: eine Darstellung zur Erläuterung der Nachlaufgeometrie eines erfindungsgemäßen Fahrzeugs;
- Figur 2: schematisch Bestandteile einer Lenkvorrichtung eines erfindungsgemäßen Fahrzeugs in Draufsicht;
- Figur 3: eine alternative Ausgestaltung der Lenkvorrichtung;
- Figur 4: schematisch eine Draufsicht auf ein erfindungsgemäßes Fahrzeug während einer Kurvenfahrt;
- Figur 5: schematisch eine Ansicht von vorne eines erfindungsgemäßen Fahrzeugs; und
- Figur 6: schematische eine Ansicht von vorne eines erfindungsgemäßen Fahrzeugs mit einer alternativen Ausgestaltung der Lenkvorrichtung.

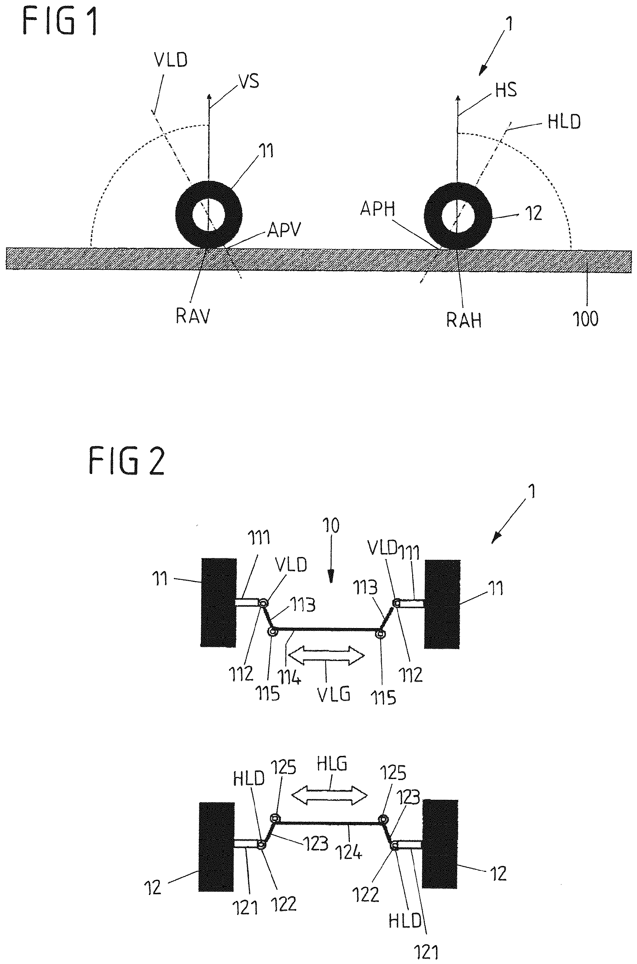

In Figur 1 sind schematisch in Seitenansicht Räder (Vorderräder 11 und Hinterräder 12) eines erfindungsgemäßen Fahrzeugs 1 dargestellt. Das Fahrzeug 1 ist mit einer Allradlenkvorrichtung ausgestattet, d.h. sowohl die Vorderräder 11 als auch die Hinterräder 12 können eine Lenkschwenkbewegung ausführen, um eine Kurvenfahrt einzuleiten. So werden die Vorderräder 11 bei einer von einem Fahrzeugführer erzeugten Lenkbewegung jeweils um eine Vorderradlenkdrehachse VLD geschwenkt, während die Hinterräder 12 um jeweils eine Hinterradlenkdrehachse HLD schwenkbar sind. Die Vorderräder 11 liegen in einem vorderen Radaufstandspunkt RAV und die Hinterräder 12 in einem hinteren Radaufstandspunkt RAH auf einer Fahrbahn 100 auf.

Die jeweilige Vorderradlenkdrehachse VLD ist relativ zu einer senkrecht zu der Fahrbahnebene 100 und durch den vorderen Radaufstandspunkt RAV verlaufenden Senkrechten VS in Vorwärtsfahrtrichtung betrachtet nach vorne geneigt, so dass sie hinter dem Radaufstandspunkt RAV auf die Fahrbahn 100 trifft (in einem Aufstandspunkt APV). Entsprechend ergibt sich in Bezug auf die Vorderräder 11 ein negativer Nachlauf, d.h. der Aufstandspunkt APV der Vorderradlenkdrehachse VLD liegt hinter dem Radaufstandspunkt RAV.

Die jeweilige Hinterradlenkdrehachse HLD ist gegenüber einer durch den hinteren Radaufstandspunkt RAH verlaufenden Senkrechten HS nach hinten geneigt, d.h. die Hinterradlenkdrehachse HLD trifft jeweils vor dem Radaufstandspunkt RAH der Hinterräder 12 auf die Fahrbahn 100 (in einem Aufstandspunkt APH). Entsprechend besteht in Bezug auf die Hinterräder 12 ein positiver Nachlauf.

Das erfindungsgemäße Fahrzeug 1 weist somit eine im Vergleich mit einem konventionellen Fahrzeug deutlich abweichende Geometrie in Bezug auf den Nachlauf der Vorder- und Hinterräder auf. Diese spezielle Nachlaufgeometrie stabilisiert das Fahrzeug bei einer Kurvendurchfahrt, wie oben bereits erläutert.

Figur 2 zeigt schematisch Bestandteile einer Lenkvorrichtung 10 eines erfindungsgemäßen Fahrzeugs 1 in Draufsicht. So umfasst die Lenkvorrichtung 10 zwei vordere Achsschenkel, die über Radachsen 111 mit den Vorderrädern 11, z.B. mit einer Radnabe, verbunden sind. Darüber hinaus sind die Radachsen 111 über Gelenke 112, die die Vorderradlenkdrehachse VLD ausbilden, mit einem Fahrzeugchassis (nicht dargestellt) schwenkbar verbunden, und zwar so, dass sie zusammen mit den Vorderrädern 11 um die jeweilige Vorderradlenkdrehachse VLD verschwenkt werden können.

Darüber hinaus sind die Radachsen 111 der Achsschenkel des Fahrzeugs über Spurhebel 113 mit einer ersten (vorderen) Spurstange 114 gekoppelt. Die Radachsen 111 sind jeweils regelmäßig so mit den Spurhebeln 113 verbunden, dass die Orientierung der Radachsen 111 und Spurhebel 113 zueinander fest ist. Beispielsweise verlaufen die Radachsen 111 und die Spurhebel 113 näherungsweise senkrecht zueinander. Die Spurhebel 113 sind jeweils einerseits zusammen mit den Radachsen 111 an dem Fahrzeugchassis (z.B. über die Gelenke 112) und über Gelenke 115 an Enden der Spurstange 114 angelenkt.

Durch eine z.B. geradlinige Bewegung, insbesondere in Fahrzeugquerrichtung, der Spurstange 114 wird eine Schwenkbewegung der Spurhebel 113 und damit der Radachsen 111 und damit der Vorderräder 11 um die Vorderradlenkdrehachse VLD erzeugt. Das Bewegen der Spurstange 114 erfolgt insbesondere über ein vorderes Lenkgetriebe VLG.

Die Lenkvorrichtung 10 weist darüber hinaus in Bezug auf die Hinterräder 12 analog zu den Vorderrädern 11 Radachsen 121 der hinteren Achsschenkel des Fahrzeugs, Spurhebel 123 und eine zweite (hintere) Spurstange 124 auf. Die hinteren Radachsen 121 sind über Gelenke 122, die die Hinterradlenkdrehachsen HLD ausbilden, an dem Fahrzeugchassis (nicht dargestellt) angelenkt und analog zu den Vorderrädern 11 um jeweils die Hinterradlenkdrehachsen HLD schwenkbar, wobei die Schwenkbewegung durch eine Bewegung der hinteren Spurstange 124 in Fahrzeugquerrichtung erzeugbar ist. Die Bewegung der hinteren Spurstange 124 wird z.B. über ein hinteres Lenkgetriebe HLG erzeugt.

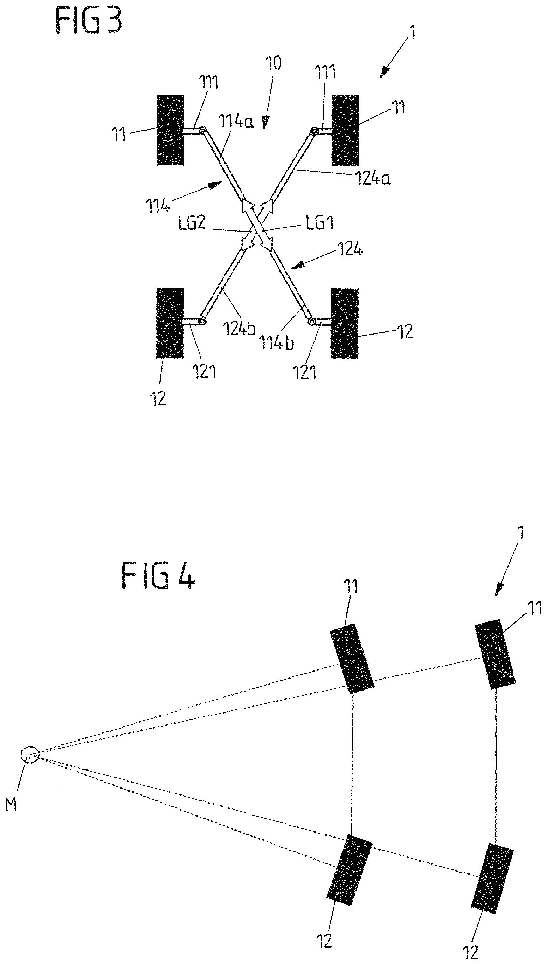

Figur 3 bezieht sich auf eine alternative Ausgestaltung der Lenkvorrichtung 10. Hier verbinden die Spurstangen 114, 124 nicht die beiden Vorderräder 11 bzw. Hinterräder 12 des Fahrzeugs 1 miteinander. Vielmehr sind die Spurstangen 114, 124 über Kreuz angeordnet, wobei die erste Spurstange 114 diagonal verläuft und eines der Vorderräder 11 mit einem auf der anderen Fahrzeugseite angeordneten Hinterrad 12 und die zweite Spurstange 124 das andere Vorderrad mit dem anderen Hinterrad verbindet.

Die Erzeugung einer Schwenkbewegung der Vorder- bzw. Hinterräder 11, 12 um die jeweiligen Lenkdrehachse VLD, HLD erfolgt zum Beispiel analog zur Figur 2 durch eine lineare Bewegung der Spurstangen 114, 124 mittels Lenkgetrieben LG1, LG2. Denkbar ist, dass die Spurstangen 114, 124 jeweils durchgehend ausgebildet sind, d.h. von dem jeweiligen Spurhebel 113 des Vorderrades 11 bis zu dem Spurhebel 123 des Hinterrades 12 verlaufen. Möglich ist allerdings auch, dass die Spurstangen 114, 124 jeweils mehrteilig (z.B. zweiteilig) ausgebildet sind. Beispielsweise umfasst die erste Spurstange 114 ein Teilsegment 114a, das von dem Vorderrad 11 bis zu dem Lenkgetriebe LG1 verläuft und ein zweites Teilsegment 114b, das sich von dem Lenkgetriebe LG1 bis zu dem Hinterrad 12 erstreckt. Entsprechend kann auch die zweite Spurstange 124 Teilsegmente 124a, 124b aufweisen. Mit einer derartigen Mehrteiligkeit der Spurstangen 114, 124 ließe sich z.B. ein gegensinniger Einschlag der Vorder- und Hinterräder 11, 12 erzeugen.

Figur 4 zeigt zur weiteren Erläuterung der Lenkgeometrie des erfindungsgemäßen Fahrzeuges die Stellung der Vorder- und Hinterräder 11, 12 des Fahrzeugs 1 während einer Kurvendurchfahrt. Die Vorder- und Hinterräder 11, 12 wurden hier jeweils gleichsinnig um die jeweiligen Lenkdrehachsen verschwenkt, wobei sich aufgrund der Orientierung der Lenkdrehachsen jedoch eine gegensinnige Rotation der Vorder- und Hinterräder 11, 12 in Bezug auf eine senkrecht zur Fahrzeuglängsachse verlaufende Achse ergibt. So sind gemäß Fig. 4 die Vorderräder 11 nach links und die Hinterräder 12 nach rechts eingeschlagen.

Das Fahrzeug 1 beschreibt während der Kurvenfahrt eine Kreisbahn um einen Mittelpunkt M. Aufgrund der besonderen Lenkgeometrie des erfindungsgemäßen Fahrzeuges befindet sich der Mittelpunkt M nicht wie bei einem Fahrzeug ohne Allradlenkung auf Höhe einer Hinterachse, d.h. einer durch die Hinterräder in Fahrzeugquerrichtung verlaufenden Achse, sondern zwischen einer Vorder- und einer Hinterachse des Fahrzeugs, d.h. bezogen auf die Fahrzeuglängsrichtung in einem mittleren Bereich des Fahrzeugs. Somit kann sich der Mittelpunkt M an im Prinzip beliebigen Positionen zwischen der Vorder- und der Hinterachse befinden, wodurch sich ein größerer Spielraum bei der Gestaltung der Lenkvorrichtung ergibt.

Denkbar ist, dass die Lage des Mittelpunktes M über eine Verstellung des Nachlaufs der Vorder- und/oder der Hinterräder 11, 12 veränderbar ist. Beispielsweise umfasst das erfindungsgemäße Fahrzeug eine Einstelleinrichtung, mit der sich die Orientierung der jeweiligen Lenkdrehachse und damit der jeweilige Nachlauf verstellen lässt.

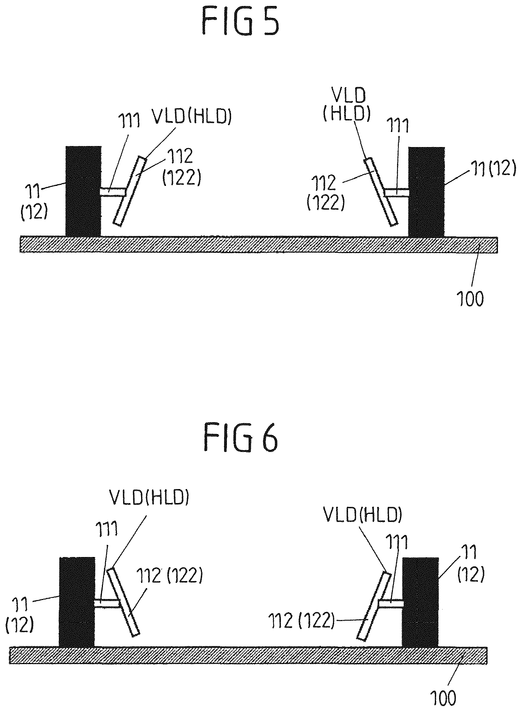

Figur 5 zeigt eine mögliche Konfiguration des Sturzes der Vorderräder 11 (oder Hinterräder 12) des erfindungsgemäßen Fahrzeugs, wonach die Vorderradlenkdrehachsen VLD (Gelenk 112) oder die Hinterradlenkdrehachsen HLD (Gelenk 122) nicht senkrecht zur Radachse 111 (121) verlaufen, sondern in einer senkrecht zur Fahrzeugquerachse verlaufenden Ebene so geneigt sind, dass ihre oberen Enden weiter von dem jeweiligen Rad entfernt sind als ihre unteren Enden (entsprechend einem positiven Sturz der Räder 11, 12). Alternativ können die Vorderradlenkdrehachsen VLD (112) oder die Hinterradlenkdrehachsen HLD (122) umgekehrt geneigt sein (vgl. Figur 6), was einem negativen Sturz der Räder 11 (12) entspricht.

## Patentansprüche

1. Mehrspuriges und mehrachsiges Kraftfahrzeug, mit mindestens zwei Vorderrädern (11) und mindestens zwei Hinterrädern (12) sowie einer Lenkvorrichtung (10), die zum Lenken der Vorder- und Hinterräder (11, 12) des Kraftfahrzeugs (1) ausgebildet ist mittels der Lenkvorrichtung (10) die mindestens zwei Hinterräder (12) jeweils um eine Hinterradlenkdrehachse (HLD) schwenkbar sind, wobei die Hinterradlenkdrehachsen (HLD) jeweils so orientiert sind, dass in Bezug auf das jeweilige Hinterrad (12) ein positiver Nachlauf entsteht, **dadurch gekennzeichnet, dass**
mittels der Lenkvorrichtung (10) die mindestens zwei Vorderräder (11) jeweils um eine Vorderradlenkdrehachse (VLD) schwenkbar sind, wobei die Vorderradlenkdrehachsen (VLD) jeweils so orientiert sind, dass in Bezug auf das jeweilige Vorderrad (11) ein negativer Nachlauf entsteht.

2. Kraftfahrzeug nach Anspruch 1, **dadurch gekennzeichnet, dass** die Vorderräder so entgegengesetzt (11) zu den Hinterrädern (12) schwenkbar sind, dass sich das Fahrzeugchassis in Folge einer Lenkbewegung bei Kurvenfahrt jeweils zur Kurveninnenseite neigt.

3. Kraftfahrzeug nach Anspruch 1 oder 2, **gekennzeichnet durch** ein rein passives Fahrwerk.

4. Kraftfahrzeug nach einem der vorhergehenden Ansprüche, **dadurch gekennzeichnet, dass** die Vorderräder (11) jeweils über eine Radachse (111) an einem Achsschenkel angebracht sind, der um die jeweilige Vorderradlenkdrehachse (VLD) schwenkbar ist, und/oder die Hinterräder (12) jeweils über eine Radachse an einem Achsschenkel (121) angebracht sind, der um die jeweilige Hinterradlenkdrehachse (HLD) schwenkbar ist.

5. Kraftfahrzeug nach einem der vorhergehenden Ansprüche, **gekennzeichnet durch** mindestens eine erste Spurstange (114), über die zumindest eines der Vorderräder (11) mit einem Lenkgetriebe (VLG, LG1) gekoppelt ist, und/oder mindestens eine zweite Spurstange (124), über die zumindest eines der Hinterräder (12) mit einem Lenkgetriebe (HLG, LG2) gekoppelt ist.

6. Kraftfahrzeug nach Anspruch 5, **dadurch gekennzeichnet, dass** die erste Spurstange (114) zumindest näherungsweise parallel zu der zweiten Spurstange (124) verläuft.

7. Kraftfahrzeug nach Anspruch 5, **dadurch gekennzeichnet, dass** die erste Spurstange (114) schräg zu der zweiten Spurstange (124) verläuft.

8. Kraftfahrzeug nach Anspruch 7, **dadurch gekennzeichnet, dass** über die erste Spurstange (114) eines der Vorderräder (11) mit einem der Hinterräder (12) und über die zweite Spurstange (124) das andere Vorderrad mit dem anderen Hinterrad gekoppelt ist.

9. Kraftfahrzeug nach einem der vorhergehenden Ansprüchen soweit rückbezogen auf Anspruch 5, **dadurch gekennzeichnet, dass** die erste Spurstange (114) über einen um die Vorderradlenkdrehachse (VLD) schwenkbaren Spurhebel (113) zumindest mit einem der Vorderräder (11) gekoppelt ist, und/oder die zweite Spurstange (124) über einen um die Hinterradlenkdrehachse (HLD) schwenkbaren Spurhebel (123) zumindest mit einem der Hinterräder (12) gekoppelt ist.

10. Kraftfahrzeug nach einem der vorhergehenden Ansprüchen, **dadurch gekennzeichnet, dass** die Vorderradlenkdrehachsen (VLD) und die Hinterraddrehachsen (HLD) so orientiert sind, dass sich jeweils das Vorderrad (11) und jeweils das Hinterrad (12) bei einer mit einer Schwenkung des Vorder- und Hinterrades (11, 12) eingeleiteten Kurvenfahrt zur Kurvenaußenseite neigt

11. Kraftfahrzeug nach einem der vorhergehenden Ansprüchen, **dadurch gekennzeichnet, dass** der Nachlauf der Vorder- und Hinterräder (11, 12) so gewählt ist, dass der Mittelpunkt (M) einer Kreisbahn, die das Fahrzeug (1) bei einer Kurvenfahrt beschreibt, zwischen einer Vorder- und Hinterachse des Fahrzeugs (1) liegt.

12. Kraftfahrzeug nach einem der vorhergehenden Ansprüchen, **dadurch gekennzeichnet, dass** sich der Betrag des Nachlaufs des Vorderrads (11) von dem Betrag des Nachlaufs des Hinterrads (12) unterscheidet.

13. Kraftfahrzeug nach einem der vorhergehenden Ansprüchen, **gekennzeichnet durch** eine Einstelleinrichtung zum Einstellen des Nachlaufs in Bezug auf das mindestens eine Vorderrad (11) und/oder zum Einstellen des Nachlaufs in Bezug auf das mindestens eine Hinterrad (12).

14. Kraftfahrzeug nach einem der vorhergehenden Ansprüchen, **dadurch gekennzeichnet, dass** das mindestens eine Vorderrad (11) und/oder das mindestens eine Hinterrad (12) einen bezogen auf eine Geradeausfahrt des Fahrzeugs (1) positiven Sturz aufweist.

15. Kraftfahrzeug nach einem der vorhergehenden Ansprüchen, **dadurch gekennzeichnet, dass** das mindestens eine Vorderrad (11) und/oder das mindestens eine Hinterrad (12) einen bezogen auf eine Geradeausfahrt des Fahrzeugs (1) negativen Sturz aufweist.

## Claims

1. Multiple-track and multiple-axle motor vehicle, having at least two front wheels (11) and at least two rear wheels (12), and a steering apparatus (10) which is configured for steering the front and rear wheels (11, 12) of the motor vehicle (1), the at least two rear wheels (12) can be pivoted in each case about a rear wheel steering pivot axis (HLD) by means of the steering apparatus (10), the rear wheel steering pivot axes (HLD) being oriented in each case in such a way that a positive caster angle is produced in relation to the respective rear wheel (12), **characterized in that** the at least two front wheels (11) can be pivoted in each case about a front wheel steering pivot axis (VLD) by means of the steering apparatus (10), the front wheel steering pivot axes (VLD) being oriented in each case in such a way that a negative caster angle is produced in relation to the respective front wheel (11).

2. Motor vehicle according to Claim 1, **characterized in that** the front wheels can be pivoted in an opposed manner (11) with respect to the rear wheels (12) in such a way that, when driving around bends, the vehicle chassis tilts in each case towards the inner side of the bend as a consequence of a steering movement.

3. Motor vehicle according to Claim 1 or 2, **characterized by** a purely passive chassis.

4. Motor vehicle according to one of the preceding claims, **characterized in that** the front wheels (11) are attached in each case via a wheel axle (111) to a steering knuckle which can be pivoted about the respective front wheel steering pivot axis (VLD), and/or the rear wheels (12) are attached in each case via a wheel axle to a steering knuckle (121) which can be pivoted about the respective rear wheel steering pivot axis (HLD).

5. Motor vehicle according to one of the preceding claims, **characterized by** at least one first track rod (114), via which at least one of the front wheels (11) is coupled to a steering gear (VLG, LG1), and/or at least one second track rod (124), via which at least one of the rear wheels (12) is coupled to a steering gear (HLG, LG2).

6. Motor vehicle according to Claim 5, **characterized in that** the first track rod (114) runs at least approximately parallel to the second track rod (124).

7. Motor vehicle according to Claim 5, **characterized in that** the first track rod (114) runs obliquely with respect to the second track rod (124).

8. Motor vehicle according to Claim 7, **characterized in that** one of the front wheels (11) is coupled to one of the rear wheels (12) via the first track rod (114), and the other front wheel is coupled to the other rear wheel via the second track rod (124).

9. Motor vehicle according to one of the preceding claims if it refers back to Claim 5, **characterized in that** the first track rod (114) is coupled at least to one of the front wheels (11) via a track rod arm (113) which can be pivoted about the front wheel steering pivot axis (VLD), and/or the second track rod (124) is coupled at least to one of the rear wheels (12) via a track rod arm (123) which can be pivoted about the rear wheel steering pivot axis (HLD).

10. Motor vehicle according to one of the preceding claims, **characterized in that** the front wheel steering pivot axes (VLD) and the rear wheel pivot axes (HLD) are oriented in such a way that in each case the front wheel (11) and in each case the rear wheel (12) tilt towards the bend outer side in the case of driving around a bend which is initiated by way of pivoting of the front and rear wheel (11, 12).

11. Motor vehicle according to one of the preceding claims, **characterized in that** the caster angle of the front and rear wheels (11, 12) is selected in such a way that the centre point (M) of a circular path which the vehicle (1) describes when driving around a bend lies between a front axle and a rear axle of the vehicle (1).

12. Motor vehicle according to one of the preceding claims, **characterized in that** the magnitude of the caster angle of the front wheel (11) differs from the magnitude of the caster angle of the rear wheel (12).

13. Motor vehicle according to one of the preceding claims, **characterized by** a setting device for setting the caster angle in relation to the at least one front wheel (11) and/or for setting the caster angle in relation to the at least one rear wheel (12).

14. Motor vehicle according to one of the preceding claims, **characterized in that** the at least one front wheel (11) and/or the at least one rear wheel (12) have/has a positive camber in relation to driving straight ahead of the vehicle (1).

15. Motor vehicle according to one of the preceding claims, **characterized in that** the at least one front wheel (11) and/or the at least one rear wheel (12) has a negative camber in relation to driving straight ahead of the vehicle (1).

## Revendications

1. Véhicule automobile multivoie à plusieurs essieux, comprenant au moins deux roues avant (11) et au moins deux roues arrière (12) et un dispositif de direction (10) conçu pour diriger les roues avant et arrière (11, 12) du véhicule automobile (1), le dispositif de direction (10) permettant de faire pivoter les au moins deux roues arrière (12) chacune sur un axe de rotation de direction de roue arrière (HLD), les axes de rotation de direction de roue arrière (HLD) étant chacun orientés de manière à créer une chasse positive par rapport à la roue arrière respective (12), **caractérisé en ce que**
le dispositif de direction (10) permet de faire pivoter les au moins deux roues avant (11) sur un axe de rotation de direction de roue avant (VLD), les axes de rotation de direction de roue avant (VLD) étant chacun orientés de manière à créer une chasse négative par rapport à la roue avant respective (11).

2. Véhicule automobile selon la revendication 1, **caractérisé en ce que** les roues avant (11) peuvent pivoter à l'opposé des roues arrière (12) de sorte que, en raison d'un mouvement de braquage dans un virage, le châssis du véhicule s'incline vers l'intérieur du virage.

3. Véhicule automobile selon la revendication 1 ou 2, **caractérisé par** une mécanisme de roulement purement passif.

4. Véhicule automobile selon l'une des revendications précédentes, **caractérisé en ce que** les roues avant (11) sont montées chacune sur un essieu (111) au niveau d'une fusée d'essieu qui peut pivoter sur l'axe de rotation de direction de roue avant (VLD) respectif et/ou les roues arrière (12) sont montées chacune sur un essieu au niveau d'une fusée d'essieu (121) qui peut pivoter sur l'axe de rotation de direction de roue arrière (HLD) respectif.

5. Véhicule automobile selon l'une des revendications précédentes, **caractérisé par** au moins une première barre d'accouplement (114) qui accouple au moins une des roues avant (11) à un mécanisme de direction (VLG, LG1) et/ou au moins une deuxième barre d'accouplement (124) qui accouple au moins une des roues arrière (12) à un mécanisme de direction (HLG, LG2).

6. Véhicule automobile selon la revendication 5, **caractérisé en ce que** la première barre d'accouplement (114) s'étend au moins approximativement parallèlement à la deuxième barre d'accouplement (124).

7. Véhicule automobile selon la revendication 5, **caractérisé en ce que** la première barre d'accouplement (114) s'étend obliquement par rapport à la deuxième barre d'accouplement (124).

8. Véhicule automobile selon la revendication 7, **caractérisé en ce que** la première barre d'accouplement (114) accouple l'une des roues avant (11) à l'une des roues arrière (12) et la deuxième barre d'accouplement (124) accouple l'autre roue avant à l'autre roue arrière.

9. Véhicule automobile selon l'une des revendications précédentes, dans la mesure où elle dépend de la revendication 5, **caractérisé en ce que** la première barre d'accouplement (114) est accouplée à au moins une des roues avant (11) par le biais d'un levier d'accouplement (113) pouvant pivoter sur l'axe de rotation de direction de roue avant (VLD) et/ou la deuxième barre d'accouplement (124) est accouplée à au moins une des roues arrière (12) par le biais d'un levier d'accouplement (123) pouvant pivoter sur l'axe de rotation de direction de roue arrière (HLD).

10. Véhicule automobile selon l'une des revendications précédentes, **caractérisé en ce que** les axes de rotation de direction de roue avant (VLD) et les axes de rotation de direction de roue arrière (HLD) sont orientés de manière à ce que chaque roue avant (11) et chaque roue arrière (12) s'incline vers le côté extérieur d'un virage lorsqu'un virage est amorcé avec un pivotement de la roue avant et de la roue arrière (11, 12).

11. Véhicule automobile selon l'une des revendications précédentes, **caractérisé en ce que** la chasse des roues avant et arrière (11, 12) est choisie de manière à ce que le point médian (M) d'une trajectoire circulaire, que décrit le véhicule (1) dans un virage, est situé entre un essieu avant et un essieu arrière du véhicule (1) .

12. Véhicule automobile selon l'une des revendications précédentes, **caractérisé en ce que** la valeur de la chasse de la roue avant (11) est différente de la valeur de la chasse de la roue arrière (12).

13. Véhicule automobile selon l'une des revendications précédentes, **caractérisé par** un moyen de réglage destiné à régler la chasse par rapport à l'au moins une roue avant (11) et/ou régler la chasse par rapport à l'au moins une roue arrière (12).

14. Véhicule automobile selon l'une des revendications précédentes, **caractérisé en ce que** l'au moins une roue avant (11) et/ou l'au moins une roue arrière (12) ont un carrossage positif par rapport à un déplacement en ligne droite du véhicule (1).

15. Véhicule automobile selon l'une des revendications précédentes, **caractérisé en ce que** l'au moins une roue avant (11) et/ou l'au moins une roue arrière (12) ont un carrossage négatif par rapport à un déplacement en ligne droite du véhicule (1).
